# EUROPÄISCHE PATENTSCHRIFT

(11) **EP 0 971 591 B1**
(45) Veröffentlichungstag und Bekanntmachung des Hinweises auf die Patenterteilung: **05.06.2002**
(21) Anmeldenummer: 98917088.1
(22) Anmeldetag: 26.03.1998
(51) Int. Cl.: A01N 47/44

(54) **DESINFEKTIONSVERFAHREN**
DISINFECTION METHOD
PROCEDE DE DESINFECTION

(30) Priorität: 04.04.1997 DE 19713850
(43) Veröffentlichungstag der Anmeldung: 19.01.2000
(73) Patentinhaber: Ecolab GmbH & CO. OHG, 40589 Düsseldorf (DE)
(72) Erfinder: VON RHEINBABEN, Friedrich, D-40597 Düsseldorf (DE); BIERING, Holger, D-41516 Grevenbroich (DE); BANSEMIR, Klaus-Peter, D-40764 Langenfeld (DE)
(86) Internationale Anmeldenummer: EP9801785
(87) Internationale Veröffentlichungsnummer: WO9844800

(56) Entgegenhaltungen:
- EP-A- 0 707 794
- WO-A-95/12395
- PATENT ABSTRACTS OF JAPAN vol. 096, no. 003, 29. März 1996 & JP 07 298862 A (OKUNO CHEM IND CO LTD), 14. November 1995
- P. GELINAS ET AL.: "Effect of temperature and contact time on the activity of eight disinfectants - A classification" JOURNAL OF FOOD PROTECTION, Bd. 47, Nr. 11, 1984, Seiten 841-847, XP002073801 in der Anmeldung erwähnt

## Beschreibung

Die vorliegende Erfindung betrifft ein Verfahren zur Desinfektion von Gegenständen mit Hilfe von flüssigen mikrobizid wirkenden Zubereitungen, das bei niedrigen Temperaturen durchgeführt werden kann.

Die Wirksamkeit herkömmlicher chemischer Desinfektionsmittel ist außer von der Einwirkzeit und der Konzentration in sehr starkem Maße von der Einwirkungstemperatur abhängig. Beispielhaft für die Untersuchungen auf diesem Gebiet sei hier nur auf die Arbeiten von P. Gelinas et al, Journal of Food Protection, Vol. 47, Nr. 11, Seiten 841 - 847 (1984) sowie von N. Noda et al., J. Jap. Ass. Infect. Dis., Vol 55, 355 - 366 (1981) hingewiesen, in denen u.a. die desinfizierende Wirkung von Chlorhexidinsalzen bzw. von Alkoholen beschrieben wurde. In vielen Fällen zeigte sich dabei außerdem, daß die abnehmende Wirksamkeit bei tiefen Temperaturen nicht über höhere Wirkstoffkonzentrationen ausgeglichen werden konnte, sofern dies aus toxikologischen Gründen überhaupt zulässig gewesen wäre. Zahlreiche bei Raumtemperatur mikrobizid wirkende Substanzen schieden daher als Wirkstoffe für einen Einsatz bei tiefen Temperaturen gänzlich aus. im allgemeinen können bereits bei Temperaturen um ca. 5 °C nur noch stark wirkende Oxidationsmittel, wie Hypochlorit und Peressigsäure, eingesetzt werden. In vielen Fällen, beispielsweise zur Desinfektion von empfindlichen Materialien, sind aber auch diese Wirkstoffe wegen ihrer Korrosivität nicht geeignet. Für die Desinfektion bei tiefen Temperaturen, insbesondere bei Temperaturen unterhalb des Gefrierpunkts, suchte man daher seit langem nach Wirkstoffen oder Wirkstoffkombinationen, die eine sichere Wirksamkeit gewährleisten, ohne schädliche Nebenwirkungen aufzuweisen.

Mit der vorliegenden Erfindung konnte auf diesem Gebiet eine durchgreifende Verbesserung erreicht werden.

Gegenstand der vorliegenden Erfindung ist ein Verfahren zur Desinfektion von Gegenständen, bei dem diese Gegenstände bei Temperaturen unter 15 °C, vorzugsweise unter 5 °C, mit einer wäßrig-alkoholischen Lösung behandelt werden, die ein mikrobizid wirksames Guanidinderivat enthält. Die Wirksamkeit ist auch bei Temperaturen von 0 °C und darunter, vorzugsweise auch bei Temperaturen unter minus 10 °C und bei Temperaturen unter minus 50 °C gegeben.

Besonders bemerkenswert ist, daß das erfindungsgemäße Verfahren bei den Anwendungstemperaturen nicht nur einige wenige Mikroorganismen oder Viren, sondern ein sehr breites Spektrum erfaßt. Außerdem ist das Desinfektionsverfahren außerordentlich materialschonend, und die für die Desinfektion verwendeten alkoholisch-wäßrigen Lösungen behalten ihre Wirksamkeit auch nach langer Lagerzeit.

Die Anwendung des neuen Verfahrens erstreckt sich einerseits auf Gegenstände, die von Natur aus kalt gehalten werden müssen und für die sich ein Erwärmen auf Raumtempertur oder darüber aufgrund ihrer Bestimmung verbietet. Beispiele hierfür sind die Desinfektion von Oberflächen in Kühlräumen, Kühlhäusern und Kühl-Lastwagen sowie von speziellen Laborgeräten, wie Kühlzentrifugen und Kühltruhen. Hierzu zählt aber auch als Spezialgebiet die Desinfektion von tiefgefrorenen oder gekühlten Lebensmitteln. Weiterhin eignet sich das neue Desinfektionsverfahren für solche Gegenstände, die aus Gründen der Materialschonung besser nicht bei Zimmertemperatur oder darüber mit herkömmlichen Desinfektionswirkstoffen in Verbindung gebracht werden sollten. Hier kann mit dem neuen Verfahren die Materialschädigung durch die Wahl niedriger Desinfektionstemperaturen erheblich zurückgedrängt werden, ohne daß die Desinfektionswirkung eingeschränkt wäre.

Kennzeichnend für das neue Verfahren ist die gleichzeitige Anwesenheit von mindestens einem niederen Alkohol und von mindestens einem mikrobizid wirksamen Guanidinderivate in der wäßrigen Desinfektionsflüssigkeit. Die Tatsache, daß die mikrobizide Wirkung dieser alkoholisch wäßrigen Lösungen nicht mit fallender Temperatur abnimmt, sondern in manchen Fällen sogar mit fallender Temperatur ansteigt, ist im Vergleich zur Temperaturabhängigkeit der Wirkung der Einzelbestandteile höchst überraschend.

Bei den im erfindungsgemäßen Verfahren verwendbaren Guanidinderivaten handelt es sich um Verbindungen, die ein oder mehrmals eine Guanidin- oder Diguanidingruppe im Molekül aufweisen, entweder in Form der freien Basen oder in Form der Salze. Beispiele derartige Verbindungen sind N-Dodecyl-N'-methylguanidinacetat, N-Octadecylguanidinacetat, N-Alkylpolymethylen-α,ω-diguanidine (z.B. Dodigen®180, Lonzabac®GA) und Polyhexamethylenbiguanid-hydrochiorid (Lonzabac®B6, Vantocil®IB). Als Guanidinderviate werden Chlorhexidin und seine Salze besonders bevorzugt. Dabei handelt es sich um Salze der Base 1,6-Di-(4-chlorphenyldiguanido)-hexan mit anorganischen oder organischen Säuren. Anstelle des Kurznamens Chlorhexidin sind für die freie Base auch andere Bezeichnungen verwendet worden, die sich aber nicht im selben Maße durchgesetzt haben. Erfindungsgemäß werden Guanidinderivate bzw. solche Salze verwendet, die im Wasser-Alkoholgemisch auch bei den gewünschten tiefen Anwendungstemperaturen löslich sind. Es kann sich dabei um ein- oder mehrbasische Salze handeln. Beispiele für geeignete Salze des Chlorhexidins sind das Dihydrochlorid, das Diacetat und, besonders bevorzugt, das Diglukonat. Selbstverständlich können auch Mischungen mehrerer Guanidinverbindungen oder Salze verwendet werden.

Die Konzentration an Guanidinverbindung beträgt in den angewendeten Lösungen üblicherweise nicht mehr als etwa 5 Gew.-%, wenn auch in Einzelfällen selbst diese Konzentration noch überschritten werden kann. Bevorzugt werden Konzentrationen im Bereich von etwa 0,05 Gew.-% bis etwa 1 Gew.-%, insbesondere im Bereich von etwa 0,1 Gew.-% bis etwa 0,5 Gew.-%.

Bei den in den Desinfektionslösungen verwendeten Alkoholen handelt es sich in erster Linie um niedere wassermischbare Alkohole, insbesondere um aliphatische Monoalkohole, doch können auch Glykole und andere flüssige Polyole und deren Partialether Verwendung finden, beispielsweise Ethylenglykol, Propylenglykol, Glycerin, Butoxyethanol und Methoxybutanol. Besonders bevorzugt werden die leicht flüchtigen Alkohole, insbsondere die Alkohole mit 1 bis 4 C-Atomen im Molekül, von denen wiederum Ethanol und n-Propanol besonders bevorzugt werden. Selbstverständlich können anstelle einzelner Alkohole auch Mischungen von zwei oder mehr Alkoholen eingesetzt werden. Im Gemisch mit wassermischbaren Alkoholen können auch in geringerer Menge aliphatische Alkohole eingesetzt werden, die nur in begrenzter Menge in Wasser löslich sind. Die Konzentration an Alkoholen in der Desinfektionslösung soll vorzugsweise etwa 40 bis etwa 98 Gew.-%, bezogen auf die gesamte Desinfektionslösung, betragen. Besonders bevorzugt werden Konzentrationsbereiche von etwa 60 bis etwa 90 Gew.-% und insbesondere etwa 70 bis etwa 80 Gew.-% an Alkohol als Lösungsmittel in der Desinfektionslösung.

Insbesondere dann, wenn die erfindungsgemäß verwendeten wäßrig-alkoholischen Chlorhexidinlösungen auch bei Raumtemperatur und darüber zur Desinfektion eingesetzt werden sollen, können diese Lösung auch andere rnikrobizid oder viruzid wirkende Subsanzen enthalten, wie sie für die Verwendung bei diesen Temperaturen bekannt sind. Zu erwähnen seien hier insbesondere quartäre Ammoniumverbindungen, Wasserstoffperoxid und andere peroxidische Verbindungen, Aldehyde, Phenole, aromatische Alkohole wie Phenoxyethanol und anorganische Säuren genannt. Die Konzentration dieser Wirkstoffe wird in herkömmlicher Weise gewählt. Eine Störung der Wirkung des erfindungsgemäßen Verfahrens bei niedrigen Temperaturen ist im allgemeinen nicht zu befürchten.

Weiterhin können die erfindungsgemäß verwendeten Desinfektionslösungen Hilfs- und Zusatzstoffe, wie sie allgemein bei wäßrigen Desinfektionslösungen üblich sind, enthalten, sofern die Wirkung des Verfahrens dadurch nicht beeinträchtigt wird. Beispiele derartiger Hilfs- und Zusatzstoffe sind Netzmittel, Hydrotrope, Tenside, Korrosionsinhibitoren, Farbstoffe und Geruchsstoffe. Ihre Konzentration richtet sich nach dem gewünschten Effekt.

Die Herstellung der Desinfektionslösung bietet keine Probleme. In der Regel wird zunächst das Chlorhexidinsalz in der für die vorgesehene Konzentration nötigen Menge in Alkohol gelöst und dann die notwendige Menge Wasser eingemischt. Sofern dies für eine schnellere Auflösung zweckmäßig ist, kann die Herstellung der Desinfektionslösung auch bei erhöhten Temperaturen erfolgen. Weitere Zusatzstoffe werden den Lösungen im allgemeinen als letztes zugesetzt, können aber gegegebenenfalls auch in die zunächst rein alkoholische Lösung oder aber in Wasser vorgelöst werden.

Die Behandlung der Gegenstände im eigentlichen Desinfektionsverfahren erfolgt dann beispielsweise durch Eintauchen der Gegenstände für eine vorbestimmte Zeit in das gekühlte Desinfektionsbad oder durch Auftragen der Desinfektionslösung auf die kalten Gegenstände, beispielsweise durch Aufsprühen, Pinseln oder durch Abwischen der Gegenstände mit einem saugfähigen Material, das mit der Desinfektionslösung getränkt ist. Die Desinfektionslösung kann dabei sowohl in vorgekühlter Form oder aber, vorzugsweise, ungekühlt auf die Gegenstände aufgetragen werden. Denkbar ist auch, die ungekühlten Gegenstände mit der Desinfektionslösung bei etwa Raumtemperatur zu behandeln und sie dann mit der anhaftenden Lösung für die Einwirkzeit auf die Desinfektionstemperatur abzukühlen, wenn diese Verfahrensweise aus bestimmten Gründen, beispielsweise zur Materialschonung, zweckmäßig erscheint. Nach erfolgter Desinfektion kann das Desinfektionsmittel auf geeignete Weise wieder von den Gegenständen getrennt werden. Vielfach ist diese Maßnahme aber enbehrlich, wenn Reste des Desinfektionsmittels in oder auf den Gegenständen toleriert werden können.

### Beispiele

Die Prüfung der mikrobiziden Wirkung erfolgte sowohl bei Raumtemperatur (Vergleich) als auch bei minus 20 °C.

Die Prüfung der viruziden Wirksamkeit erfolgte entsprechend der Richtlinie des Bundesgesundheitsamtes und der Deutschen Vereinigung zur Bekämpfung der Viruskrankheiten (Zbl. Hyg. 1990: 189, 554 - 562) im Virussuspensionstest. Zur Testdurchführung wurde das Desinfektionsmittel mit der jeweiligen Testvirussuspension im Verhältnis 9 : 1 gemischt und nach Ablauf der Versuchszeit diesem Ansatz eine Probe zur Virustitration entnommen. In den Fällen, in denen der Suspensionstest mit einer zusätzlichen Eiweißbelastung durchgeführt wurde, betrug das Mischungsverhältnis 8 : 1 : 1 (Desinfektionslösung zu Eiweißlösung zu Virussuspension).

Folgende Virussuspensionen wurden eingesetzt:
Poliovirus Typ 1, Stamm Mahoney (Anzucht und Titration auf Rhabdomyosarkomzellen)
Adenovirus Typ 2, Stamm Adenoid 6 (Anzucht und Titration auf Hela-Zellen) Herpes simplex Virus Typ 1, Stamm hv (Anzucht und Titration auf Verozellen)
Vakziniavirus (Anzucht auf Verozellen)
Simianvirus 40, Stamm 777 (Anzucht und Titration auf CV₁-Zellen)

Die Mischung der Desinfektionslösung und der Virussuspension erfolgte in allen Fällen bei Raumtemperatur (Gesamtvolumen jeweils 100 bis 200 Mikroliter) in Eppendorf-Gefäßen, unmittelbar danach wurden die dafür vorgesehenen Röhrchen durch Eintauchen in ein Kühlbad schockartig auf die Einwirkungstemperatur abgekühlt. Nach der vorgesehenen Einwirkungszeit bei dieser Temperatur wurden die Proben erneut auf Zimmertemperatur erwärmt und dann der Virusnachweis in Mikrotitrationsverfahren mit Hilfe der obengenannten Zellinien durchgeführt, nachdem eine Verdünnungsreihe entsprechend der Progression 1 : 10, 1 : 100, 1 : 1000 usw. hergestellt worden war.

Die mikrobizide Wirksamkeit der erfindungsgemäß verwendeten Zusammensetzung wurde in einem Flächentest analog den Richtlinien für die Prüfung und Bewertung chemischer Desinfektionsverfahren, Stand 12.07.1991, durchgeführt, die von der Desinfektionsmittel-Kommission der Deutschen Gesellschaft für Hygiene und Mikrobiologie (DGHM) herausgegeben wird (mhp-Verlag, Ostring 13, 6200 Wiesbaden).

| Als Prüforganismen dienten | | |
|---|---|---|
| Staphylococcus aureus | ATCC | 6538 |
| Pseudomonas aeruginosa | ATCC | 15442 |
| Mycobacterium terrae | ATCC | 15755 |
| Candida albicans | ATCC | 10231 |
| Aspergillus fumigatus | | |

Als Testfläche dienten für diese Untersuchungen 2 x 2 cm große Stahlplättchen, die auf Styroporplatten mit versenkten Magneten fixiert wurden. Die Kontamination erfolgte mit 10 µl Keimsuspension, die gleichmäßig auf die Stahlplatte verteilt wurde. Anschließend wurden die Keimträger bei minus 20 °C ca. 20 Minuten (im Kryostaten) gelagert, bevor jeweils 0,2 ml der zu untersuchenden Desinfektionslösung aufgetragen und mit einem Glasspatel verrieben wurde. Nach den vorgegebenen Einwirkungszeiten wurden die Keimträger vom Magneten abgelöst und in Nährlösungen mit Enthemmer eingebracht. Die Rückgewinnung der Kolonien bildenden Einheiten (KBE) erfolgte nach der Methode von van Klingeren (s. Richtlinien der DGHM, Stand 12.07.1991).

In der folgenden Tabelle sind die Versuchsergebnisse bei verschiedenen Temperaturen und verschiedenen Einwirkungszeiten aufgeführt. Die Zahlenwerte geben in logarithmischen Einheiten (log₁₀) die Reduktionsfaktoren beim Gehalt an Mikroorganismen bzw. Viren nach der jeweiligen Einwirkungszeit an.

Die Versuchsergebnisse lassen erkennen, daß mit der erfindungsgemäß verwendeten wäßrig-alkoholischen Chlorhexidinlösung ein breites Wirksamkeitsprofil auch weit unterhalb des Gefrierpunktes beibehalten wird.

**Tabelle**

| | | | | | | |
|---|---|---|---|---|---|---|
| Viruzide und mikrobizide Wirksamkeit | | | | | | |
| Abkürzungen: EWZ: Einwirkzeit RF: Reduktionsfaktor RT: Raumtemperatur | | | | | | |

| Nr. | Rezeptur | Temp. in °C | Virus / Testkeim | RF/EWZ 5 Min. | RF/EWZ 10 Min. | RE/EWZ 15 Min. |
|---|---|---|---|---|---|---|
| 1 | 0,2 g Chlorhexidindi- | -20 | Polio | 4,4 | 4,4 | 4,4 |
| | gluconat | -20* | | 4 | 4 | 4 |
| | 90,0 ml Ethanol (96%) | -20** | | 3,9 | >4,5 | 4,4 |
| | dest. Wasser ad 100 ml | | | | | |
| | | -20 | HSV | >4 | >4 | >4 |
| | | -20* | | >4 | >4 | >4 |
| | | -20** | | >4 | >4 | >4 |
| | | | | | | |
| | | -20 | Vacc. | >4 | >4 | >4 |
| | | -20* | | >4 | >4 | >4 |
| | | -20** | | >4 | >4 | >4 |
| | | | | | | |
| | | -20 | SV 40 | >3,5 | >3,5 | >3,5 |
| | | -20* | | >3,5 | >3,5 | >3,5 |
| | | -20** | | >3,5 | >3,5 | >3,5 |
| | | | | | | |
| | | -20 | Staph. | 5,26 | 5,70 | 5,81 |
| | | | aureus | | | |
| | | -20 | Pseud. | 5,58 | 5,60 | 5,48 |
| | | | aerog. | | | |
| | | -20 | Myc. | 4,35 | 5,48 | 5,23 |
| | | | terrae | | | |
| | | -20 | Cand. | 4,54 | 5,02 | 5,36 |
| | | | alb. | | | |
| | | -20 | Asperg. | 4,35 | 5,50 | 5,62 |
| | | | fumig. | | | |
| 2 | 74,5 ml Ethanol (96 %) | RT | Polio | 0,4 | 0,7 | 0,7 |
| | dest. Wasser ad 100 ml | -20 | | 0 | 0 | 0 |
| | | | | | | |
| | | RT | SV 40 | 1,2 | 1,4 | 2,1 |
| | | -20 | | 1,3 | 1,4 | 1,5 |

| | | | | | | |
|---|---|---|---|---|---|---|
| * Unter Zusatz von fötalem Kälberserum | | | | | | |
| ** Unter Zusatz von Rinderserumalbumin | | | | | | |

## Patentansprüche

1. Verfahren zur Desinfektion von Gegenständen, bei dem diese Gegenstände mit einer wäßrig-alkoholischen Lösung behandelt werden, die eine mikrobizid wirksame Guanidinverbindung enthält, **dadurch gekennzeichnet, daß** diese Behandlung bei Temperaturen unter 15 °C vorgenommen wird.

2. Verfahren nach Anspruch 1, bei dem die Lösung das mikrobizid wirksame Guanidinderivat in einer wirksamen Menge bis zu 5 Gew.-%, vorzugsweise in einer Menge zwischen 0,05 und 1 Gew.-% bezogen auf die gesamte Lösung enthält.

3. Verfahren nach einem der Ansprüche 1 oder 2, bei dem ein Chlorhexidinsalz verwendet wird, ausgewählt aus der Grupe Chlorhexidindichlorid, Chlorhexidindiacetat, Chlorhexidindigluconat und deren Mischungen.

4. Verfahren nach Anspruch 3, bei dem Chlorhexidindigluconat verwendet wird.

5. Verfahren nach einem der Ansprüche 1 bis 4, bei dem der in der Desinfektionslösung verwendete Alkohol aus der Gruppe der Alkohole mit 1 bis 4 C-Atomen und Gemischen solcher Alkohole ausgewählt ist.

6. Verfahren nach Anspruch 5, bei dem der Alkohol aus der Gruppe Ethanol, n-Propanol und Mischungen dieser beiden Alkohole ausgewählt ist.

7. Verfahren nach einem der Ansprüche 1 bis 6, bei dem die Alkoholkonzentration in der Desinfektionslösung 40 bis 98 Gew.-%, vorzugsweise 60 bis 90 Gew.-% und insbesondere 70 bis 80 Gew.-% beträgt.

8. Verfahren nach einem der Ansprüche 1 bis 7, bei dem die Desinfektionsbehandlung der Gegenstände bei Temperaturen unter 0 °C, vorzugsweise unter minus 10 °C und insbesondere unter minus 50 °C vorgenommen wird.

9. Verfahren nach einem der Ansprüche 1 bis 8 zur Zerstörung von Viren.

## Claims

1. A process for disinfecting articles in which the articles are treated with an aqueous alcoholic solution containing a microbicidal guanidine compound, **characterized in that** the treatment is carried out at temperatures below 15°C.

2. A process as claimed in claim 1, **characterized in that** the slution contains the microbicidal guanidine derivative in an effective quantity of up to 5% by weight and preferably in a quantity of 0.05 to 1% by weight, based on the solution as a whole.

3. A process as claimed in claim 1 or 2, **characterized in that** a chlorhexidine salt selected from the group consisting of chlorhexidine dichloride, chlorhexidine diacetate, chlorhexidine digluconate and mixtures thereof is used.

4. A process as claimed in claim 3, **characterized in that** chlorhexidine digluconate is used.

5. A process as claimed in any of claims 1 to 4, **characterized in that** the alcohol used in the disinfecting solution is selected from the group of alcohols containing 1 to 4 carbon atoms and mixtures thereof.

6. A process as claimed in claim 5, **characterized in that** the alcohol is selected from the group consisting of ethanol, n-propanol and mixtures of these two alcohols.

7. A process as claimed in any of claims 1 to 6, **characterized in that** the concentration of alcohol in the disinfecting solution is from 40 to 98% by weight, preferably from 60 to 90% by weight and more preferably from 70 to 80% by weight.

8. A process as claimed in any of claims 1 to 7, **characterized in that** the disinfecting treatment of the artides is carried out at temperatures below 0°C, preferably at temperatures below -0°C and more preferably at temperatures below -50°C.

9. A process as claimed in any of claims 1 to 8 for destroying viruses.

## Revendications

1. Procédé de désinfection d'objets, dans lequel on traite les objets avec une solution alcoolique aqueuse qui contient un composé de guanidine à action microbicide,
**caractérisé en ce que**
l'on procède à ces traitements à des températures inférieures à 15 °C.

2. Procédé selon la revendication 1,
dans lequel la solution contient le dérivé de guanidine à action microbicide en une quantité efficace allant jusqu'à 5 % en poids, de préférence en une quantité comprise entre 0,05 et 1 % en poids, par rapport à l'ensemble de la solution.

3. Procédé selon l'une des revendications 1 ou 2,
dans lequel on utilise un sel de chlorhexidine choisi dans le groupe du dichlorhydrate de chlorhexidine, du diacétate de chlorhexidine, du digluconate de chlorhexidine et de leurs mélanges.

4. Procédé selon la revendication 3,
dans lequel on utilise le digluconate de chlorhexidine.

5. Procédé selon l'une des revendications 1 à 4,
dans lequel l'alcool utilisé dans la solution désinfectante est choisi dans le groupe des alcools comportant de 1 à 4 atomes de carbone, et les mélanges de ces alcools.

6. Procédé selon la revendication 5,
dans lequel l'alcool est choisi dans le groupe constitue par l'éthanol, le n-propanol et les mélanges de ces deux alcools.

7. Procédé selon l'une des revendications 1 à 6,
dans lequel la concentration d'alcool dans la solution désinfectante s'élève à 40 à 98 % en poids, de préférence à, 60 à 90 % en poids, et en particulier à 70 à 80 % en poids.

8. Procédé selon l'une des revendications 1 à 7, dans lequel on procède au traitement désinfectant des objets à des températures inférieures à 0 °C, de préférence inférieures à -10 °C et en particulier inférieures à -50 °C.

9. Procédé selon l'une des revendications 1 à 8, visant à détruire les virus.
